Europäisches Patentamt

European Patent Office

Office européen des brevets

(19)

(11) Numéro de publication : **0 046 717 B2**

(12) **NOUVEAU FASCICULE DE BREVET EUROPEEN**

(45) Date de publication du nouveau fascicule du brevet : **13.03.91 Bulletin 91/11**

(51) Int. Cl.⁵ : **B60Q 1/26**

(21) Numéro de dépôt : **81401348.8**

(22) Date de dépôt : **27.08.81**

(54) **Vitrage à feu de signalisation incorporé, pour véhicule automobile, et son procédé de fabrication.**

(30) Priorité : **27.08.80 DE 3032245**

(43) Date de publication de la demande : **03.03.82 Bulletin 82/09**

(45) Mention de la délivrance du brevet : **30.10.85 Bulletin 85/44**

(45) Mention de la décision concernant l'opposition : **13.03.91 Bulletin 91/11**

(84) Etats contractants désignés : **AT BE CH DE FR GB IT LI LU NL SE**

(56) Documents cités :
DE-A- 1 265 608
DE-A- 1 813 706
DE-A- 1 906 866
DE-A- 2 002 516
DE-A- 2 522 058
DE-A- 2 655 990
DE-U- 67 510 69
FR-A- 1 440 029
US-A- 1 646 617
US-A- 2 740 105
US-A- 3 665 392

(73) Titulaire : **SAINT GOBAIN VITRAGE INTERNATIONAL**
**"Les Miroirs" 18, avenue d'Alsace**
**F-92400 Courbevoie (FR)**
**BE CH FR GB IT LI LU NL SE AT**
Titulaire : **VEGLA Vereinigte Glaswerke GmbH**
**Viktoriaallee 3-5**
**W-5100 Aachen (DE)**
**DE**

(72) Inventeur : **Ohlenforst, Hans**
**Im Johannistag 71**
**W-5100 Aachen (DE)**
Inventeur : **Gatzweiler, Werner**
**Schützenstrasse 12**
**W-5100 Aachen (DE)**

(74) Mandataire : **Eudes, Marcel**
**Saint-Gobain Recherche 39 Quai Lucien Lefranc**
**F-93304 Aubervilliers Cedex (FR)**

## Description

La présente invention concerne un vitrage pour véhicules automobiles, en particulier une lunette arrière.

Les lunettes arrière courantes sont essentiellement destinées à offrir au conducteur du véhicule une vue vers l'arrière aussi large que possible.

L'invention a pour objet une lunette arrière pour véhicules automobiles qui, comme telle, remplisse non seulement des fonctions de sécurité pour le conducteur du véhicule lui-même mais aussi les fonctions de sécurité en même temps essentielles pour les conducteurs des véhicules suivants.

On connait le montage de feu de signalisation au niveau des vitrages automobiles.

Comme on l'a déjà mentionné, le montage de feux de signalisation supplémentaires, en particulier de feux de stop, à hauteur des lunettes arrière est avantageux pour les véhicules suivants et ce en particulier, lorsque les véhicules évoluent en colonne.

Les feux supplémentaires sont cependant montés sur des tiges de support ou sur d'autres supports à une certaine distance de la lunette arrière. Ce montage est onéreux. De plus, il est relativement très encombrant. Finalement, les tiges de support sont également gênantes pour l'image optique.

On connait aussi d'après le brevet US-A-3 665 392 et le modèle d'utilité DE-U-6 751 069 des feux rapportés sur la vitre par collage après la fabrication et/ou le montage de ladite vitre.

L'invention réside dans le fait qu'au moins une partie d'un feu de signalisation électrique est fixée rigidement et à demeure sur la feuille de verre et en ce que des moyens sont ménagés sur ou dans le vitrage au cours de sa fabrication, avant son traitement thermique, en vue de la fixation dudit feu sur ledit vitrage.

Tous les inconvénients cités précédemment sont évités par le montage conforme à l'invention de tels feux de signalisation directement au niveau de la feuille de verre elle-même ou sur celle-ci. Les feuilles de verre servent elles-mêmes de support pour les feux de signalisation ou pour des parties de ceux-ci, et il suffit alors, lors de leur fabrication, de prendre des mesures correspondantes pour rendre possible le montage ou la fixation des feux ou des parties en question sur la feuille de verre et d'autre part il faut que les feux soient façonnés de manière adéquate pour pouvoir être fixés pour leur part sur la feuille de verre ou pour pouvoir coopérer avec la partie fixée sur la feuille de verre.

Les feux disposés conformément à l'invention sont réalisés et connectés en particulier comme des feux de stop, leur coiffe étant à cet effet faite de corps en matière plastique peinte ou en verre coloré pourvu de prismes réfléchissants. Les feux peuvent être montés en supplément des feux de stop ou des feux de recul habituels. Ils peuvent cependant aussi reprendre complètement la fonction des feux arrière habituels, de sorte que l'ensemble de la combinaison des feux montés à l'arrière du véhicule et comprenant des feux arrière, des feux de stop, des feux clignotants et le cas échéant des phares de recul peuvent conformément à l'invention être installés dans la feuille de verre de la lunette arrière. Dans le cas mentionné en dernier lieu, par exemple les lampes électriques comme telles peuvent aussi être montées dans les montants de la carrosserie limitant la lunette arrière latéralement, de sorte que la lunette arrière prolongée le cas échéant latéralement, doit simplement être pourvue, dans les zones situées devant les lampes, des coiffes colorées destinées à ces lampes.

Dans la réalisation pratique de l'invention, les feux complets peuvent être fixés sur la feuille de verre à des perçages correspondants ou à des supports reliés à la feuille de verre. Dans une réalisation avantageuse de l'invention, les feux sont réalisés en deux parties d'une manière telle que la coiffe colorée soit disposée sur la surface extérieure de la lunette arrière tandis que te boîtier des feux est monté sur la face de la feuille de verre tournée vers l'habitacle. Les deux parties des feux peuvent être reliées l'une à l'autre directement par un ou plusieurs perçages traversant la feuille de verre de part en part. Par ailleurs, chacune des deux parties des feux peut être reliée à la surface correspondante de la feuille de verre de sorte que, dans ce cas, les rayons lumineux traversent la feuille de verre.

Les feux de signalisation installés conformément à l'invention sont avantageusement prévus dans la partie supérieure de la lunette arrière et ce, en particulier dans les zones de ses coins supérieurs. Grâce à ce montage, lorsque des véhicules évoluent en colonne, ils sont également particulièrement bien visibles même à travers plusieurs véhicules.

Selon une réalisation avantageuse, les conducteurs électriques d'alimentation ou une partie des conducteurs d'alimentation pour les feux de signalisation ont la forme de bandes conductrices imprimées et cuites sur les feuilles de verre. Ces bandes conductrices sont disposées en particulier le long du bord des feuilles de verre de sorte que, le cas échéant, elles peuvent être recouvertes partiellement ou complètement par la moulure de caoutchouc encerclant la feuille de verre. Grâce à ces bandes conductrices, la connexion électrique au réseau de bord peut être effectuée à un endroit sur la feuille de verre favorable à cette connexion. La connexion entre les bandes conductrices et les feux eux-mêmes peut être réalisée à l'aide de moyens connus comme par exemple des bornes de connexion soudées sur les bandes conductrices et sur lesquelles un câble de connexion est enfiché, ou des doigts de contact prévus sur les boîtiers des feux et pressés comme tels contre les bandes conductrices lorsque le boîtier est monté. Le montage des bandes conductrices et leur connexion au réseau de bord et aux feux de signalisation peuvent par exemple s'effectuer de la manière décrite dans la publication de brevet allemand 30 04 457.

L'invention concerne également un procédé de fabrication d'un vitrage susceptible de recevoir un feu de signalisation comme décrit précédemment. Selon ce procédé, l'encadrement entourant la surface lumineuse est imprimé par sérigraphie mur la feuille de verre à l'état d'ébauche au moyen d'une peinture opaque durcissent par cuisson et la pointure est ensuite cuite au cours du processus de bombage et/ou de trempe de la feuille de verre.

Il est avantageux que les vitres soient pourvues en outre de conducteurs de chauffage électriques cuits en place. Ces conducteurs de chauffage peuvent être imprimés au cours du même procédé que les conducteurs électriques d'alimentation pour les feux de signalisation et sont alors cuits avec ceux-ci et éventuellement avec les éléments imprimés nécessaires pour les feux de signalisation au cours du même procédé de traitement thermique que celui qui est en outre nécessaire pour le bombage et/ou la trempe de la feuille de verre.

D'autres caractéristiques et détails de l'invention ressortiront de la description suivante de diverses formes d'exécution donnée à titre d'exemple avec référence aux dessins annexés dans lesquels :

la Figure 1 est une vue d'ensemble d'une lunette arrière comportant deux feux de signalisation intégrés à cette lunette arrière ;

la Figure 2 est la vue d'ensemble d'une lunette arrière comportant des feux de signalisation intégrés qui sont chaque fois formés d'une combinaison lumineuse de deux feux ;

les Figures 3 à 9 illustrent diverses formes d'exécution pour la réalisation et la fixation des feux et des feuilles de verre dans la région des feux, chacune de ces figures étant une vue en coupe d'un feu simple.

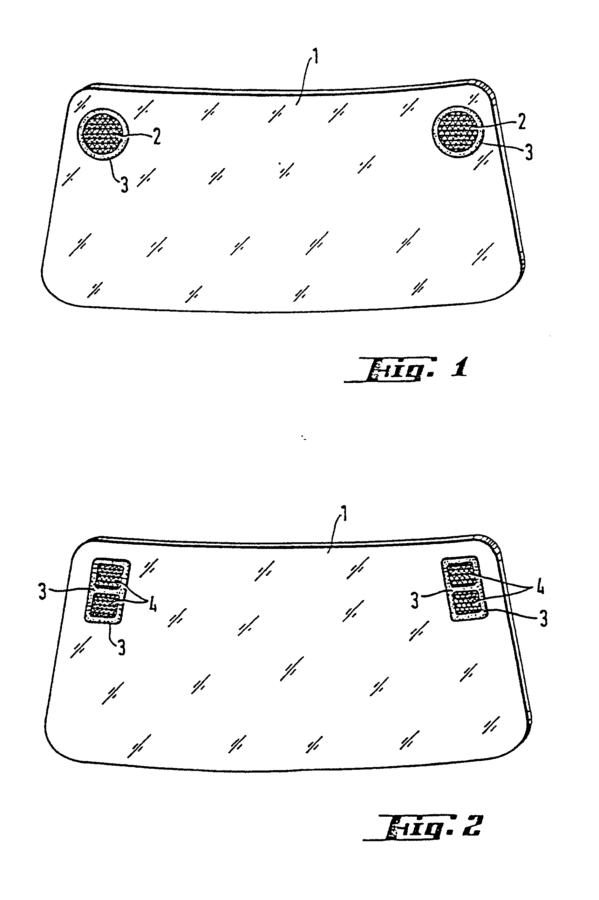

La Fig. 1 illustre le montage conforme à l'invention dans sa forme d'exécution de base la plus simple. La lunette arrière 1 est en verre silicaté réalisé sous la forme d'un verre de sécurité, c'est-à-dire d'un verre de sécurité monocouche trempé ou d'un verre multicouches qualifié de verre de sécurité feuilleté. Habituellement, les lunettes arrière sont pourvues de conducteurs chauffants électriques pour dégager ou maintenir libre le champ de vision en cas de formation de buée ou de givre. Pour plus de simplicité, les lunettes arrière sont représentées sans ces conducteurs de chauffage.

Un feu de signalisation 2 est installé dans les zones de chaque coin supérieur de la feuille de verre, à une distance relativement faible des poids de la feuille de verre, la seule partie visible dans la vue de face prise de l'extérieur étant la coiffe colorée pourvue de prismes réfléchissants. Un encadrement 3 fait d'une peinture opaque durcissant par cuisson est prévu sur la surface du verre. Les feux de signalisation 2 ont la forme de feux simples et peuvent être utilisés comme feux de stop supplémentaires auquel cas ils sont connectés en parallèle avec les feux de stop disposés plus bas dans la carrosserie.

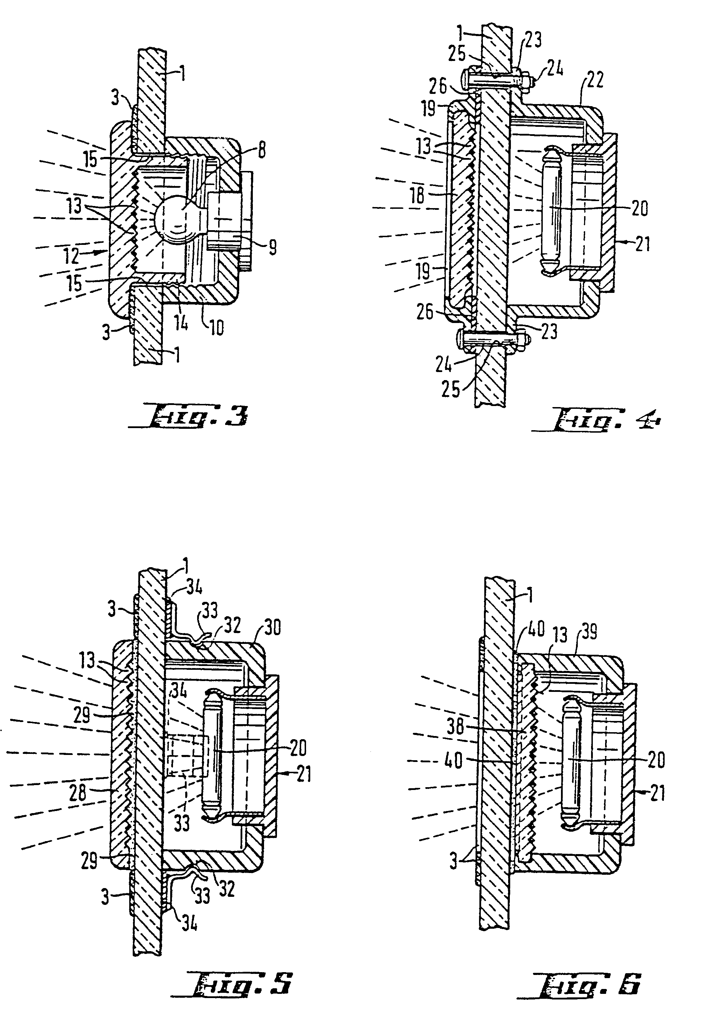

La Fig. 2 illustre une lunette arrière 1 en verre silicaté qui présente, dans chacune des zones de coin supérieures, un montage combiné 4 de deux feux de signalisation. Les deux feux et leur coiffe, qui peuvent former bien entendu chaque fois un élément monolithique, sont superposés dans la forme d'exécution ici représentée mais les champs individuels d'un tel montage combiné de feux, peuvent aussi bien entendu être disposés l'un à côté de l'autre et en ligne dans le sens horizontal.

Les feux sont à nouveau entourés par un encadrement 3 qui est fait d'une peinture opaque durcissant par cuisson et qui est cuit dans la surface de la feuille de verre 1.

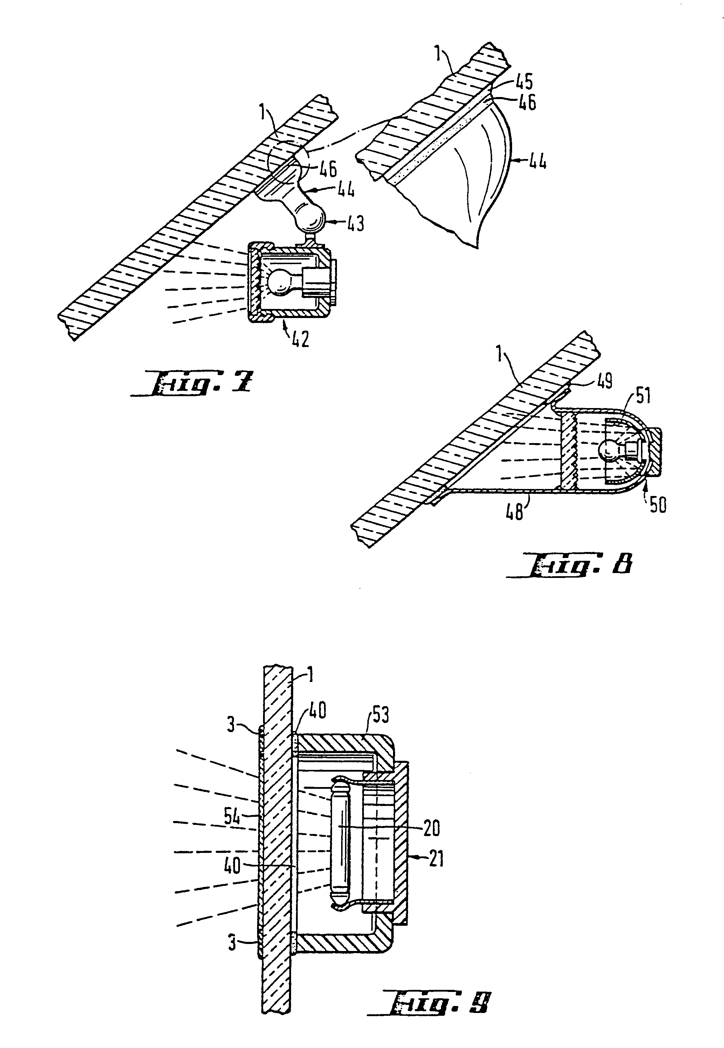

Une première forme d'exécution d'un feu de signalisation réalisé et installé conformément à l'invention est illustrée sur la Fig. 3. Le feu est fait de deux parties, à savoir le boîtier 10 d'une part qui porte la lampe électrique 8 et la douille de lampe 9 et la coiffe 12 d'autre part formant la plaque de recouvrement colorée. La coiffe 12 est faite d'une matière plastique transparente ou d'un verre transparent coloré, au moins dans la zone qui forme la coiffe transparente aux rayons lumineux. Sur sa face postérieure, la coiffe 12 est pourvue d'une empreinte formant des prismes réfléchissants 13. La coiffe 12 comprend en outre une saillie annulaire 14 qui est disposée dans un perçage de dimension correspondante 15 ménagé dans la feuille de verre 1 et qui s'étend à travers la feuille de verre 1 au point que le boîtier 10 soit fixé sur le bord de la saillie 14 qui dépasse de la surface intérieure de la feuille de verre 1. La fixation de la saillie 14 au boîtier 10 peut être assurée par un effet de serrage ou au moyen de pas de vis, comme le montre par exemple la Fig. 3. Un encadrement 3 fait d'une peinture opaque durcissant par cuisson est disposé sur la surface extérieure de la feuille de verre 1 le long du perçage rond 15.

Une autre forme d'exécution dans laquelle le feu de signalisation est également fixé au moyen de perçages prévus dans la feuille de verre, est représentée sur la Fig. 4. Dans ce cas aussi, le feu est fait de deux parties, à savoir une partie de coiffage disposée sur la surface tournée vers l'extérieur et comportant la coiffe colorée 18 et un encadrement 19 encerclant cette coiffe 18, et un boîtier 22 portant la lampe électrique 20 et sa douille 21 qui est disposé sur la surface de la feuille de verre 1 orientée vers l'habitacle. Pour la fixation, le boîtier 22 est pourvu d'une saillie annulaire 23. La saillie 23 est fixée à l'encadrement 19 encerclant la coiffe 18 au moyen de vis 24 qui traversent des perçages 25 disposés de manière correspondante dans la feuille de verre 1. Entre l'encadrement 19 et la feuille de verre 1 est prévu un anneau d'étanchéité 26 fait d'une matière d'étanchéité élastique.

Une autre forme d'exécution, dans laquelle la coiffe du feu de signalisation est également disposée d'un côté de la feuille de verre et le boîtier de l'autre côté de cette feuille de verre est représentée sur la Fig. 5. Dans cette forme d'éxécution, aucun perçage n'est nécessaire dans la feuille de verre 1. La coiffe 28 en matière plastique ou en verre coloré transparent est dans ce cas unie à plat à la feuille de verre 1 par l'intermédiaire d'une couche d'adhésif transparent 29.

Les prismes réfléchissants ou de déviation de la coiffe 28 sont, dans la forme d'exécution représentée, disposés du côté tourné vers la feuille de verre. En variante, les prismes pourraient être prévus sur la surface libre. De plus, ils peuvent être conformés et agencés de manière à faire dévier les rayons lumineux provenant de la lampe électrique dans une direction préférentielle existante. Cette particularité est utilisée surtout lorsque la lunette arrière est montée sous un angle d'inclinaison important, ces prismes assurant alors que les rayons lumineux soient déviés dans le sens horizontal.

A titre d'adhésif transparent pour le collage de la coiffe 28 à la surface de la feuille de verre, on peut utiliser par exemple du polyvinylbutyral ou un adhésif à base de polyuréthane. La coiffe 28 est à nouveau entourée par un encadrement 3 fait d'une peinture opaque durcissant par cuisson qui est cuite au cours du procédé de fabrication de la feuille de verre. Le boîtier 30 du feu est disposé de l'autre coté de la feuille de verre 1 et contient la lampe électrique 20 et la douille de lampe 21. Le boîtier 30 du feu est fixé par serrage. A cet effet, le boîtier est pourvu de rainures d'encliquetage 32 qui coopèrent avec des attaches élastiques 33. Les attaches élastiques 33 sont fixées par soudage à la feuille de verre 1 et à cet effet, la feuille de verre 1 est pourvue en ces endroits d'une couche 34 appliquée par métallisation qui permet le soudage. Pour de telles couches appliquées par métallisation et permettant le soudage, on peut utiliser des compositions habituelles pour la fabrication de lunettes arrière chauffantes électriques.

Les boîtiers des feux peuvent aussi en principe être montés directement dans les montants de la carrosserie dilimitant la lunette arrière latéralement. Dans ce cas, aucune liaison rigide n'est prévue entre le boîtier et la feuille de verre mais la feuille de verre est alors disposée simplement devant les feux ou les réflecteurs de manière que les coiffes 28 se trouvent devant eux. Dans un tel cas, il faut le cas échéant déjà tenir compte de ces conditions lors de la construction de la carrosserie parce que, en règle générale, les feuilles de verre sont prolongées latéralement et que la forme de la carrosserie doit aussi y être adoptée.

Il est également possible, conformément à la forme d'exécution représentée sur la Fig. 6, de réaliser les feux de signalisation dans l'ensemble d'une seule pièce en collant la coiffe colorée 38, qui est fixée dans le boîtier 39 du feu ou à celui-ci, par l'intermédiaire d'une couche d'adhésif transparente 40 à la surface interne de la feuille de verre 1 tournée vers l'habitacle. On peut à nouveau utiliser un adhésif transparent on polyvinylbutyral ou en polyuréthane. Un encadrement 3 en une peinture opaque durcissant par cuisson est à nouveau prévu sur l'autre surface de la feuille de verre qui est tournée vers l'extérieur.

La Fig. 7 illustre une forme d'exécution de l'invention qui convient en particulier pour des lunettes arrière à angle de montage très incliné ou pour des lunettes arrière fortement bombées. Dans ce cas, le feu de signalisation 42 est pourvu d'un pied de support 44 muni d'une articulation tournante ou à rotule 43 qui est fixé pour sa part sur la feuille de verre 1. La fixation peut être réalisée au moyen de techniques connues, comme celles que l'on utilise par exemple pour fixer des rétroviseurs intérieurs sur la face interne d'un pare-brise. Dans le cas représenté, la feuille de verre 1 est pourvue, dans la zone dans laquelle elle est reliée au pied de support, d'une couche 45 d'un émail opaque durcissant par cuisson qui est cuit au cours du processus de bombage et/ou de trempe de la feuille de verre. Cette couche 45 sert d'une part à protéger la couche d'adhésif 46 contre les rayons solaires directs, en particulier contre les rayons UV, et d'autre part à dissimuler l'endroit collé. Dans cette forme d'exécution, le feu de signalisation lui-même peut être orienté dans la direction souhaitée indépendamment de la forme et de la position de montage de la lunette arrière.

La Fig. 8 illustre une autre forme d'exécution dans laquelle le boîtier 48 du feu de signalisation est à nouveau relié à la feuille de verre 1 par l'intermédiaire d'une couche d'adhésif 49 et dans le boîtier 48 est prévue une douille de lampe pivotante 50 qui, par l'intermédiaire d'un réflecteur parabolique 51 prévu sur la face interne de la douille pivotante 50, permet une orientation des rayons lumineux dans la direction souhaitée.

Il est particulièrement avantageux de remplacer la coiffe colorée par une couche filtrante transparente colorée prévue immédiatement sur la surface de la feuille de verre. On peut alors ou bien renoncer entièrement à la coiffe ou bien utiliser le cas échéant une coiffe non colorée qui est sensiblement moins couteuse qu'une coiffe colorée. Une telle forme d'exécution est représentée sur la Fig. 9. Dans ce cas, le dispositif à appliquer en sus sur la feuille de verre comprend simplement le boîtier de lampe 53 avec la lampe 20 et la douille de lampe 21 qui est fixée à la feuille de verre 1 par l'intermédiaire d'une couche d'adhésif 40. En face du boîtier 53, sur l'autre surface de la feuille de verre, est disposé l'encadrement 3 fait d'un émail opaque durcissant par cuisson et à l'intérieur de l'encadrement 3 est prévue une couche d'émail transparent en particulier rouge ou jaune 54. Ces deux couches sont imprimées par sérigraphie à titre de couche d'émail permettant l'impression sur l'ébauche de verre et sont ensuite fondues ou cuites sur la surface du verre au cours du processus de bombage et/ou de trempe de la feuille de verre.

Dans toutes les formes d'exécution de l'invention décrite, il faut tenir compte du fait que les mesures nécessaires pour la fixation et/ou la disposition de l'encadrement sont prises déjà au cours de la fabrication de la feuille de verre, c'est-à-dire avant le traitement thermique nécessaire pour le bombage ou pour la trempe de la feuille de verre. En d'autres termes, les perçages pour la fixation des faux, doivent être ménagés et les matières d'impression pour les encadrements et les couches de métallisation pour le montage des attaches de fixation ou d'autres moyens de fixation doivent être appliquées déjà avant le traitement thermique de la feuille de verre parce que d'une part il n'est plus possible de percer une feuille de verre trempé et que d'autre part les couches de peinture durcissant par cuisson ou les couches appliquées par métallisation sont cuites au cours du réchauffage pour le processus de bombage ou de trempe.

## Revendications

1. Vitrage pour véhicules automobiles, en particulier lunette arrière susceptible de recevoir un feu électrique de signalisation, au moins une partie du feu électrique de signalisation (2, 4) étant fixée rigidement et à demeure sur la feuille de verre (1) caractérisé en ce que des moyens sont ménagés sur ou dans le vitrage au cours de sa fabrication, avant son traitement thermique, en vue de la fixation dudit feu sur ledit vitrage.

2. Vitrage suivant la revendication 1, caractérisé en ce que la partie du feu de signalisation qui est fixée rigidement à la feuille de verre est sa coiffe colorée (12, 18, 28, 38) ou une couche filtrante transparente colorée (53) faisant office de coiffe.

3. Vitrage selon une des revendications 1 ou 2, caractérisé en ce que les moyens ménagés sur ou dans le vitrage sont des perçages (15, 25) qui traversent la feuille de verre de part en part.

4. Vitrage selon une des revendications 1 à 3, caractérisé en ce que le feu de signalisation (2, 4) comprend une partie comportant la coiffe (12, 18) colorée disposée sur la face externe de la feuille de verre (1) et une partie formant boîtier (10, 22) disposée du côté de la feuille de verre (1) tourné vers l'habitacle, parties qui s'appuient contre les surfaces de la feuille de verre (1) et qui sont attachées l'une à l'autre à l'aide de moyens de fixation traversant les perçages (15, 25).

5. Vitrage suivant la revendication 4, caractérisé en ce que la feuille de verre (1) présente un perçage (15) de dimension correspondant à celle du champ lumineux du feu de signalisation et en ce que la coiffe (12) disposée sur la face externe de la feuille de verre (1) est pourvue d'une saillie annulaire (14) qui traverse le perçage (15) et qui est fixée à la partie formant boitier (10).

6. Vitrage selon la revendication 1, caractérisé en ce que les moyens ménagés sur ou dans le vitrage sont des parties métallisées de la feuille de verre, en des endroits où sont prévues des attaches élastiques (33) pour fixer la partie formant boitier (30) sur la surface intérieure de la feuille de verre (1), ces attaches étant soudées à la feuille de verre (1) sur les parties métallisées.

7. Vitrage selon une des revendications 1 à 6, caractérisé en ce que la feuille de verre (1) est pourvue d'un encadrement (3) qui entoure le champ lumineux et qui est fait d'une peinture opaque durcissant par cuisson.

8. Vitrage selon une des revendications 1 à 7, caractérisé en ce que les conducteurs électriques d'alimentation des feux sont formés au moins pour partie par des bandes conductrices imprimées sur la surface de la feuille de verre.

9. Vitrage selon la revendication 8, caractérisé en ce que la bande conductrice est pourvue en outre de conducteurs chauffants imprimés.

10. Procédé pour fabriquer un vitrage pour véhicules automobiles, susceptible de recevoir un feu électrique de signalisation, au moins une partie du feu électrique de signalisation (2, 4) étant fixée rigidement et à demeure sur la feuille de verre et un encadrement (3) entourant la surface lumineuse, caractérisé en ce que l'encadrement (3) entourant la surface lumineuse est imprimé par sérigraphie sur la feuille de verre à l'état d'ébauche au moyen d'une peinture opaque durcissant par cuisson et en ce que la peinture est ensuite cuite au cours du processus de bombage et/ou de trempe de la feuille de verre.

## Ansprüche

1. Glasscheibe für Kraftfahrzeuge, insbesondere Heckscheibe, zur Aufnahm einer elektrischen Warnleuchte, wobei wenigstens ein Teil der elektrischen Warnleuchte (2, 4) fest und dauerhaft auf der Glasscheibe (1) befestigt ist, **dadurch gekennzeichnet,** daß im Zuge der Herstellung der Glasscheibe vor ihrer thermischen Behandlung Mittel für die Befestigung der Warnleuchte auf der Glasscheibe auf oder in der Glasscheibe eingearbeitet werden.

2. Glasscheibe nach Anspruch 1, dadurch gekennzeichnet, daß der mit der Glasscheibe fest verbundene Teil der Warnleuchte deren gefärbte Abdeckscheibe (12, 18, 28, 38) oder eine als solche dienende farbige transparente Filterschicht (53) ist.

3. Glasscheibe nach Anspruch 1 oder 2, dadurch gekennzeichnet, daß die auf oder in der Glasscheibe eingearbeiteten Mittel Bohrungen (15, 25) sind, die die Glasscheibe vollständig durchdringen.

4. Glasscheibe nach einem der Ansprüche 1 bis 3, dadurch gekennzeichnet, daß die Warnleuchte (2, 4) einen auf der Außenseite der Glasscheibe (1) angeordneten, die gefärbte Abdeckscheibe (12, 18) umfassenden Teil und einen auf der dem Fahrgastraum zugewandten Seite der Glasscheibe (1) angeordneten, das Gehäuse bildenden Teil (10, 22) umfaßt, die sich gegen die Oberflachen der Glasscheibe (1) abstützen und mit Hilfe von die Bohrungen (15, 25) durchdringenden Befestigungsmitteln miteinander verspannt sind.

5. Scheibe nach Anspruch 4, dadurch gekennzeichnet, daß die Glasscheibe (1) mit einer der Größe des Leuchtfeldes der Warnleuchte entsprechenden Bohrung (15) versehen ist, und daß die auf der Außenseite der Glasscheibe (1) angeordnete Abdeckscheibe (12) mit einem ringförmigen Ansatz (14) versehen ist, der die Bohrung (15) durchdringt und an dem das das Gehäuse bildende Teil (10) befestigt ist.

6. Glasscheibe nach Anspruch 1, dadurch gekennzeichnet, daß die auf oder in der Glasscheibe eingearbeiteten Mittel metallisierte Teile der Glasscheibe sind, und zwar an Stellen, an denen für die Befestigung des das Gehäuse (30) bildenden Teils auf der inneren Oberfläche der Glasscheibe (1) elastische Klemmen (33) vorgesehen sind, die ihrerseits mit der Glasscheibe (1) auf den metallisierten Teilen verlötet sind.

7. Glasscheibe nach einem der Ansprüche 1 bis 6, dadurch gekennzeichnet, daß die Glasscheibe (1) mit einem das Leuchtfeld umgebenden Rahmen (3) aus einer opaken Einbrennfarbe versehen ist.

8. Glasscheibe nach einem der Ansprüche 1 bis 7, dadurch gekennzeichnet, daß die Stromzuleitungen für die Leuchten wenigstens teilweise von auf die Oberfläche der Glasscheibe aufgedruckten Leitbändern gebildet sind.

9. Glasscheibe nach Anspruch 8, dadurch gekennzeichnet, daß das Leitband außerdem mit aufgedruckten Heizleitern versehen ist.

10. Vefahren zur Herstellung einer Autoglasscheibe für die Aufnahme einer elektrischen Warnleuchte, wobei wenigstens ein Teil der elektrischen Warnleuchte (2, 4) fest und dauerhaft auf der Glasscheibe befestigt ist und ein Rahmen (3) das Leuchtfeld umgibt, dadurch gekennzeichnet, daß der das Leuchtfeld umgebende Rahmen (3) auf den Glasscheibenrohling aus einer opaken Einbrennfarbe durch Siebdruck aufgedruckt wird, und daß die Einbrennfarbe im Zuge des Biege- und/oder des Vorspannprozesses der Glasscheibe eingebrannt wird.

**Claims**

1. A pane for automobile vehicles, in particular a rear window pane capable of receiving an electric light, at least a part of the electric light (2, 4) being rigidly and permanently fixed to the glass sheet (1), characterized in that means are formed on or in the pane during the course of its manufacture, before its thermal treatment, for the purpose of fixing said light to said pane.

2. A pane according to Claim 1, characterized in that the part of the light which is rigidly fixed to the glass sheet is its coloured cover (12, 18, 28, 38) or a coloured transparent filter layer (53) acting as the cover.

3. A pane according to one of Claims 1 or 2, characterized in that the means formed on or in the pane are openings (15, 25) which pass through the glass sheet from one side to the other.

4. A pane according to one of Claims 1 to 3, characterized in that the light (2, 4) comprises a part comprising the coloured cover (12, 18) disposed on the outer face of the glass sheet (1) and a part forming a holder (10, 22) disposed on the side of the glass sheet (1) towards the vehicle interior, these parts bearing against the faces of the glass sheet (1) and being attached to each other by fixing means passing through the openings (15, 25).

5. A pane according to Claim 4, characterized in that the glass sheet (1) has an opening (15) of dimension corresponding to the field of illumination of the light and in that the cover (12), disposed on the outer face of the glass sheet (1), is provided with an annular projection (14) which passes through the opening (15) and which is fixed to the part forming the holder (10).

6. A pane according to Claim 1, characterized in that the means formed on or in the pane are metallized parts of the glass sheet, at locations at which elastic fastenings (33) are provided for fixing the part forming the holder (30) to the inner face of the glass sheet (1), these fastenings being welded to the glass sheet (1) on the metallized zones.

7. A pane according to one of Claims 1 to 6, characterized in that the glass sheet (1) is provided with a frame (3) which surrounds the field of illumination and which is formed of an opaque paint which hardens by baking.

8. A pane according to one of Claims 1 to 7, characterized in that the electrical conductors for feeding the lights are formed at least in part by conducting strips printed onto the surface of the glass sheet.

9. A pane according to Claim 8, characterized in that the conducting strip is provided, in addition, with printed heating conductors.

10. A method of making a pane for automobile vehicles, capable of receiving an electric light, at least a part of the electric light (2, 4) being rigidly and permanently fixed to the glass sheet and a frame (3) surrounding its field of illumination, characterized in that the frame (3) surrounding the field of illumination is printed by screen printing onto the glass sheet while in its condition as a blank by means of an opaque paint which hardens by baking and in that the paint is thereafter baked during the course of the process for curving and/or toughening the glass sheet.

**Fig. 1**

**Fig. 2**

_Fig. 3_

_Fig. 4_

_Fig. 5_

_Fig. 6_

_Fig: 7_

_Fig: 8_

_Fig: 9_